# EUROPEAN PATENT APPLICATION

(11) **EP 2 615 790 A1**
(43) Date of publication of application: **17.07.2013**
(21) Application number: 12382006.0
(22) Date of filing: 12.01.2012
(51) Int. Cl.: H04L 29/06, H04N 21/238, H04N 21/262

(54) **Method, system and devices for improved adaptive streaming of media content**

(71) Applicant: Alcatel Lucent, 75007 Paris (FR)
(72) Inventor: Perez Garcia, Pablo, 28050 Madrid (ES); Villegas Nuñez, Alvaro, 28050 Madrid (ES); Ruiz Alonso, Jaime, 28050 Madrid (ES)
(74) Representative: Carpintero Lopez, Francisco

(57) **Abstract**

A method, system for improved delivery of a certain media content from a multimedia server to an end device using Hypertext Transfer Protocol, HTTP, adaptive streaming where the streamed media content is segmented into segments, each containing a certain part of the media stream coded at a specific bit rate for each segment. The segments are divided in independent fragments which can be sent independently to the end device. A segment can be decoded and played even if not all the fragments of the segments have been correctly received with a minimum effect in the quality perceived by the end device user. A media server and an end device according to embodiments of the invention are also presented.

## Description

### BACKGROUND OF THE INVENTION

### Technical field

The present invention relates to the improvement of content streaming and more particularly specifically to a method and device for an improved media content adaptive streaming.

### Description of related art

In general, media content streaming refers to a media service wherein a user (or users) may receive (or simultaneously receive) and playback content, usually media content such as music, images, video, multimedia, audio or any other type of media content. The media content may be sourced by a server to the subscriber(s) over a communications network.

The main problem faced in media contents distribution, including streaming, is the limitation of resources, e.g. bandwidth for transmission, storage capacity...therefore, several compression techniques for media content has been developed.

One of the most used techniques for Multimedia content compression and more specifically for video content is MPEG-2 (and then sent in an MPEG Transport Stream).

MPEG-2 is a standard for the generic coding of moving pictures and associated audio information. It describes a combination of lossy video compression and lossy audio compression methods which permit storage and transmission of movies using currently available storage media and transmission bandwidth.

MPEG-2 specifies that raw data frames be compressed into three kinds of frames: intra-coded frames (I-frames), predictive-coded frames (P-frames), and bidirectionally-predictive-coded frames (B-frames). An I-frame is a compressed version of a single uncompressed (raw) frame. It takes advantage of spatial redundancy and of the inability of the eye to detect certain variations in the image. Unlike P-frames and B-frames, I-frames do not depend on data in the preceding or the following frames. Typically, every 15th frame (i.e. every 0.5 seconds) is made into an I-frame. P-frames and B-frames might follow an I-frame like this, IBBPBBPBBPBB(I), to form a Group Of Pictures (GOP); however, the standard is flexible about this.

P-frames provide more compression than I-frames because they take advantage of the data in the previous I-frame or P-frame. I-frames and P-frames are called reference frames, as they can be referenced to by other frames. The processing of B-frames is similar to that of P-frames except that B-frames use the picture in the following reference frame as well as the picture in the preceding reference frame. As a result, B-frames usually provide more compression than P-frames.

For the delivery of the media content, different streaming techniques have been developed.

Hypertext Transfer Protocol (HTTP) adaptive streaming (also known as HAS) is a solution used to deliver multimedia content to users wherein the HTTP protocol is used for the transport of content media data and where the bit rate is adapted to the network capacities. In HTTP adaptive streaming, a protocol set of HTTP/Transmission Control Protocol/IP (HTTPITCP/IP) may be used for transport of media data that is encapsulated as files (also know as segments). HTTP may also be used for the control of the streaming processes and eXtensible Markup Language (XML) may typically be used for description of the content media data. The description of the content media data is typically referred to as Media Presentation Description (MPD) or simply a manifest.

The HAS protocol works as follows: a certain media content is going to be streamed to an end device, the content is encoded at a specific bit rate as a concatenation of segments, each containing a few seconds of the stream, with the property that at the segment boundaries, that is, between the end of one segment (e.g the last byte) and the beginning of the next segment, the end device can switch from one variant (at a particular bit rate) to another (at a different bit rate) without any visible effects on the screen or the audio. The user of the end device does not realize of the fact that there is a jump between segments: the jump is seamless. In other words: there is no discontinuity in video or in audio. Of course, if the difference of bit rates is high, there is a difference in quality between segments, and this could be perceived by the user. Each of these segments has its own URL (so it can be said that each segment is an independent file) and, therefore, it is accessible as an independent asset, so once it is present in an HTTP server it can be retrieved by a standard web client using pure HTTP mechanisms.

Compared to other types of streaming protocols, HTTP adaptive streaming may have the following advantages:
- HTTP adaptive streaming has the ability to use standard servers and standard HTTP caches (or cheap servers in general) to deliver the content, so that it can be delivered from a Content Distribution Network (CDN) or any other standard server farm.
- HTTP adaptive streaming has the ability to move control of 'streaming session' entirely to the client, which basically only opens one or several TCP connections to one or several standard HTTP servers or caches.
- HTTP adaptive streaming enables easy and effortless streaming services by avoiding Network Address Translation (NAT) and firewall traversal issues
- HTTP adaptive streaming enables start of the streaming process after transmitting fewer protocol messages

But it has also some disadvantages. The end device (known also in this scenario, as HAS client) requests segments at one bit rate or another depending on the bandwidth of the connection (e.g. a TCP connection) between the end device and the server. Basically, when the buffer in the client is emptying, the HAS client requires lower bitrates in the segments, i.e. lower quality (that is, when the buffer is emptying, it means that the effective bit rate provided by the network is smaller than the rate the data are being consumed in the client, so the client needs to request data with less bits per segment as it needs that the segments are received as fast as possible). When the buffer stays full enough, it can use high bitrates in the segments i.e. higher quality (that is, if the buffer is getting full, it means that the effective bit rate provided by the network is higher than the rate the data are being consumed in the client, so the client can request data with more bits per segment as it does not need that the segments are received as fast as possible). That's why we say that in the HAS protocol, the bit rate is adapted to the network capacities.

By keeping enough amount of buffering, the playout of the content can be seamless during this process. If by any chance (an abrupt drop of network transmission rate) the buffer gets empty, then the playout stops (freezes) while the buffer fills again.

In cases where network capabilities vary strongly, this implementation requires an important amount of buffering in the client end device. When using HAS to transmit live events, however, increasing the buffer means increasing the latency, which is undesirable in such scenarios. For non-live content the effect is a slower startup time, what is also undesirable. On the other hand, if the buffer is small, underruns may be frequent, which is also undesirable in all kind of transmissions (as freezing the video and starting from the same point for a while is not an option, as a general rule).

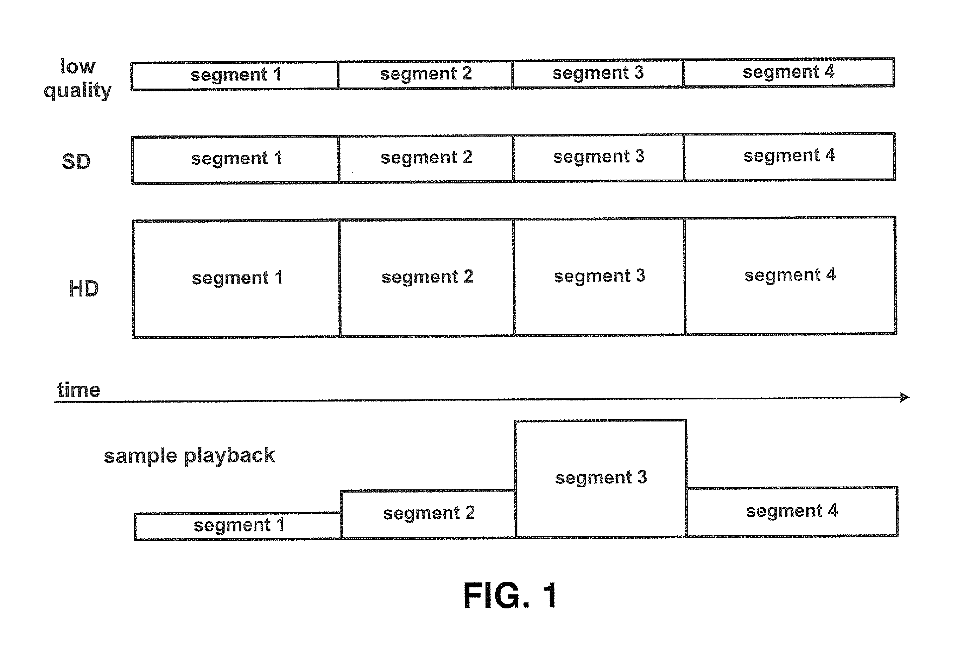

HTTP adaptive streaming works as shown in Figure 1. The source media content is encoded at several bitrates (and therefore at different qualities) and then segmented into chunks (typically the length of the chunks is between 2-10 seconds; the length of all the chunks may be similar, or even equal, but it is not an strict requirement) known as segments. As it can be seen in figure 1, there are different qualities (bit rates), low quality, standard quality SD and high quality HD. In the final sample playback, the client selects the bit rate (quality) of each segment depending on several factors (mainly depending on the bandwidth of the TCP connection between the client and the server).

The segment size is a compromise between flexibility and efficiency: shorter segments allow changing bit rate more frequently (as the bit rate may be changed for every segment) and therefore reducing the required buffering time; however, they increase the server complexity (as it has to handle more segment requests) and the protocol overhead.

Besides, there is a condition which establishes a minimum length for the segments. Said condition is the following: it must be possible for the client to start decoding the video from the very beginning of any segment. In video coding technology, it is only possible to start decoding the video at an "intra-coded" picture or frame (I picture or I frame), that is, an image which has been encoded without reference to other pictures. The rest of the pictures may encoded by predicting its pixel values from the pixel values of other pictures, thus called "inter-coded pictures" (P -predicted- or B -bipredicted-pictures). Hence, the beginning of a segment should be the beginning of an I frame.

Therefore the end of each segment has to be the last bit before an intra-coded frame (e.g. a Random Access Point). Therefore the minimum length of a segment is the period between intra-coded frames. This period depends on the implementation of the video encoder, but it is typically between 12 and 48 frames, which in a typical scenario is between about 0.5 and 2 seconds). In other words, minimum segment length will be the minimum intra coded picture period which, due to coding efficiency, is rarely under 0.5 seconds. Therefore in HAS scenarios, all the decisions are taken within a time resolution (segment length) which is at least 0.5 seconds long, and typically much longer than that. There is no solution to handle low-buffering systems (which imply shorter segments) beyond this point.

The embodiments of the invention stated below will overcome at least some of these drawbacks.

### SUMMARY

These and other problems are generally solved or circumvented, and technical advantages are generally achieved, by example embodiments of the present invention which provide a method, system and devices for improved HAS, HTTP adaptive streaming.

According to a first aspect of the invention, a method is provided for improved delivery of a certain media content from a media server to an end device using Hypertext Transfer Protocol, HTTP, adaptive streaming where the streamed media content is segmented, each segment containing a certain part of the media stream coded at a specific bit rate for each segment, said method comprising:
a) Dividing each media content segment in N fragments, being N a design parameter
b) Assigning a priority to each fragment and associating to each fragment, information required to restore the original position of each fragment in the segment to which they belong.
c) A prioritized segment is created by concatenating fragments in priority order, said segment including the associated information for each fragment
d) Said prioritized segment is sent from the media server to the end device in priority order starting with the fragment with highest priority
e) The end device receiving the fragments and storing the fragments in a buffer in their original position, using the associated information to obtain the original position of each fragment in the segment to which they belong
f) The end device retrieving a fragment from the buffer and decoding and playing the retrieved fragment even if not all the fragments of the segment to which the retrieved fragment belong have been received and buffered

The order of the method steps is not a critic issue, so other method steps orders are also possible.

In an exemplary embodiment, when the end device starts decoding fragments belonging to a certain segment for playout, the end device stops buffering the fragments of said certain segment even if not all the fragments of said segment have been received and buffered and, optionally, the time when the end device starts decoding fragments of a certain segment for playout is the time when the end device has finishing playing the previous segment if the certain segment is not the first segment of the media stream or a predefined time if the certain segment is the first segment of the media stream.

In an embodiment of the invention, the size of each fragment is smaller than the size of a media frame so the information from a media frame is allocated to more than one fragment.

In another embodiment of the invention the assigned priority to a fragment of the segment depends on the effect that the lost of said fragment would have in the quality perceived by an user of the end device playing the segment.

In an exemplary embodiment,, after step *c) the prioritized segment is* divided in K sub-segments each including several fragments, where K is a design parameter, where the 1^{st} sub-segment has the highest priority and Kth sub-segment has the lowest and said sub-segments are built in a way that having only the 1^{st} sub-segment allows playing the whole segment and in step d) said sub-segments are sent in priority order that is, starting by the subsegment 1, then 2...til sub-segment K.

In an exemplary embodiment, the steps of dividing the each media content segment in N fragments, being N a design parameter, assigning a priority to each fragment and associating information to each segment are performed by the media server and in an alternative embodiment the steps of dividing the each media content segment in N fragments, being N a design parameter, assigning a priority to each fragment and associating information to each segment are performed by a node different from the media server and then the fragments, the priority information and the associated information are sent to the media server for transmission to the end device.

In an exemplary embodiment, each fragment may contain only one type of media source either audio or video, and there is no information from two different media content frames in the same fragment and where the information associated to each fragment is a sequence number and/or a byte stamp which indicates the offset of the fragment from the beginning of the segment.

Optionally, the media content stream is packetized according to the Real Time Transport Protocol RTP and each fragment correspond to a RTP packet.

In an exemplary embodiment, the end device can require to the server provider to change the bit rate coding of the following segment to be transmitted.

In an embodiment, the media content is coded using a MPEG-2 standard and the media content includes audio frames, intra-coded frames, I-frames, predictive-coded frames, P-frames and bidirectionally-predictive-coded frames, B-frames and, optionally, the assignment of priority is done giving a higher priority to fragments including Instantanious Decoder Refresh frames, then to fragments including audio, then fragments including reference frames and finally fragments including no reference frames

In an exemplary embodiment, the segments are scrambled using a selective scrambling technique.

In an embodiment, the associated information is included in a separate information package added to the segment or alternatively the associated information is included in each fragment, being said metadata information for example, a sequence number or a time stamp for each fragment.

According to another aspect of the invention, it is provided a system for improved delivery of a certain media content from a media server to an end device using Hypertext Transfer Protocol, HTTP, adaptive streaming where the streamed media content is segmented, each segment containing a certain part of the media stream coded at a specific bit rate for each segment, said system comprising:
- A node comprising:
   - Means for dividing each media content segment in N fragments, being N a design parameter
   - Means for assigning a priority to each fragment
   - Means for associating to each fragment information required to restore the original position of the fragments in each segment
   - Means for creating a prioritized segment by concatenating fragments in priority order, said segment including the associated information for each fragment
- At least a media server comprising:
   - Means for sending said prioritized segment from the media server to the end device in priority order starting with the fragment with highest priority
- At least and end device comprising:
   - Means for receiving the fragments via HTTP, and means for receiving the information associated to said fragments and means for storing them into a buffer in the original position using the associated information
- Means for retrieving a fragment from the buffer and decoding and playing the retrieved fragment even if not all the fragments of the segment to which the retrieved fragment belong have been received and buffered

According to another aspect of the invention, a media server device is provided for improved delivering of a certain media content to an end device using Hypertext Transfer Protocol, HTTP, adaptive streaming where the streamed media content is segmented each segment containing a certain part of the media stream coded at a specific bit rate for each segment, said media server comprising:
- Means for dividing each media content segment in N fragments, being N a design parameter
- Means for assigning a priority to each fragment
- Means for associating to each fragment information required to restore the original position of the fragments in each segment
- Means for creating a prioritized segment by concatenating fragments in priority order, said segment including the associated information for each fragment
- Means for sending said prioritized segment from the media server to the end device in priority order starting with the fragment with highest priority

According to another aspect of the invention, an end device is provided for improved delivery of a certain media content from one media server to the end device using Hypertext Transfer Protocol, HTTP, adaptive streaming where the streamed media content is segmented into, each segment containing a certain part of the media stream coded at a specific bit rate for each segment and where each media content segment is divided in N fragments, each fragment having assigned a certain priority, being N a design parameter, the end device comprising:
- Means for receiving the fragments via HTTP, and means for receiving the information associated to said fragments and means for storing them into a buffer in the original position using the associated information
- Means for retrieving a fragment from the buffer and decoding and playing the retrieved fragment even if not all the fragments of the segment to which the retrieved fragment belong have been received and buffered

According to another aspect of the invention, a computer program product is provided, comprising computer-executable instructions for performing any of the method previously disclosed, when the program is run on a computer and a digital data storage medium is also provided encoding a machine-executable program of instructions to perform any of the methods disclosed.

Consequently, according to the invention, a system, method, devices and computer program according to the independent claims are provided. Favorable embodiments are defined in the dependent claims.

These and other aspects of the invention will be apparent from and elucidated with reference to the embodiments described hereinafter.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a schematic diagram of the segments in an HTTP adaptive streaming solution.
Figure 2 shows a schematic diagram of the segments transmitted (left figure) and displayed (right figure) using a prior art HAS technique (top part) and using a technique according to an embodiment of the invention (bottom part).

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope

The following embodiments solves some of the problems found in the prior art content streaming techniques.

In the following embodiments, we are going to refer to the streaming of multimedia content but the embodiments are applicable as well to any other type of media content streaming.

In an exemplary embodiment of the invention, the information contained in each segment of the HAS streaming (the audio and/or video frames of the multimedia content) may be arranged in priority order, instead of in the original temporal order. A companion associated information (e.g. metadata) included in the segment may carry all the information required to restore the original order. Depending on the delivery architecture this metadata may be part of the transport level or a separate information package added to the segment.

Once the information has been arranged this way, if there is drop in network quality and, for example, only an 80% of the segment can be received by the client on time, instead of dropping the 20% of the segment duration, the client will drop the 20% which is less important. In the case, for example, of a 10-second segment, the different would be dropping completely at least the last 2 seconds (without the proposed embodiment solution) versus dropping, for example, some frames along the whole segment (which also affects the Quality of Experience, but in a less aggressive way).

The assigned priority to a fragment of the segment depends on the effect that the lost of said fragment has in the Quality of Experience (that is, the quality perceived by the user). That is, the more important the fragment is for the Quality of Experience of the segment when played by an user (i.e. the higher the effect in the lost of quality perceived by the user if the fragment is lost), the more priority it has.

In a first exemplary embodiment of the present invention, the following steps are implemented:
1. On the multimedia content server side, each multimedia content segment (original segment) of the HAS streaming is divided into fragments (the number of fragments in which each segment is divided and/or the length of each fragment is a design parameter), with the following requirements:
   - Each fragment contains homogeneous data: that is each fragment does not content data from more than one elementary stream (video, audio or data) and/or from more than one access unit (frame or field) of that elementary stream.
   - Each fragment has associated information (metadata) including information which allows to restore its original position in the segment (the temporal original position). For example, said associated information may be a sequence number.
   - Each fragment is assigned a priority. Any prioritization algorithm may be used. As explained before, said priority may depend on the effect of losing that specific fragment would cause to the overall Quality of Experience, that is QoE based algorithm (the quality perceived by an user of the end device playing by the media content).
   - If all the fragments are concatenated according to the associated information (e.g. sequence number order), then the result is the original segment or a valid segment of the multimedia stream equivalent to the *original segment* from the decoding point of view (i.e. can be reproduced by a normal multimedia decoder, with the same result as reproducing the original segment), but with maybe a different order in the frames. This segment is called "recovered segment"
   The associated information which allows restoring the fragments original position in the segment can include also a "byte stamp" that is the offset of each fragment (measured in bytes) from the beginning of the recovered segment.
2. A prioritized segment is created by concatenating fragments in priority order. This segment includes the metadata for each fragment, said metadata including priority of each fragment and the associated information to restore the original order (e.g. sequence number and byte stamp). Fragments with the same priority value may be ordered for example in sequence number order. This prioritized segment is sent from the multimedia server to the end device or in other words, the fragments are sent to the end device by the multimedia server in priority order.
3. The prioritized segment is retrieved by the end device and stored in a memory buffer. When the client starts receiving the prioritized segment via HTTP (i.e. it can be retrieved by a standard web client using pure HTTP mechanisms), it starts extracting the fragments into the buffer. Each segment is put at their right position using the associated information (sequence number and/or byte stamp), rebuilding therefore the recovered segment. The buffer may be consumed at normal pace by the client (no special buffering policy is needed). If the segment is consumed before the whole segment has arrived, then there will be gaps in the buffer; but they will take place in the less important positions (the ones with less priority and therefore, less impact to QoE). Late arrivals are discarded. In an exemplary embodiment, instead of only one buffer, there are two buffers: the fragments are firstly stored in a first buffer in receiving order and then extracted from this first buffered and stored in a second buffer in their right position using the associated information

Fragments may be smaller than a video frame (i.e. dividing each frame into several fragments) as it allows better performance of the solution (more granularity), although it is not mandatory.

In a second exemplary embodiment the following steps are implemented:
1. The *original segment* is divided into fragments and prioritized, in the same way as step 1 of the previous embodiment and they are concatenated in priority order to create the *prioritized segment.*
2. A prioritized segment is created by concatenating fragments in priority order. This segment includes the metadata for each fragment, said metadata including priority of each fragment and the associated information to restore the original order (e.g. sequence number and byte stamp). The *prioritized segment* is divided again in K sub-segments (where K is a design parameter), with the following characteristics:
   a. The concatenation of all the sub-segments is the *prioritized segment.*
   b. Therefore 1^{st} sub-segment has the highest priority and Kth sub-segment has the lowest.
   c. This sub-segments are built in a way that having only the 1^{st} sub-segment allows reproducing the whole segment (although with lower quality than with more sub-segments all the segments). For example, in a prioritization as explained above (first IDRs, then audio, then video reference pictures...), a 1^{st} sub-segment can include all the fragments with contains IDR frames, a second segment all the audio frames.... If only this first sub-segment is retrieved, the whole original segment could be reproduced, but of course, with a minimum quality (may be two or three frames per second...). If the second sub-segments is also retrieved, the audio fragments are added and, therefore, the quality of experience is raised.
3. Sub-segments are sent in priority order that is, starting by the subsegment 1, then 2...til sub-segment K and each sub-segment can be retrieved individually by the client. Recovery and rebuilt of the *recovered segment* is done in the same way that was done for the previous embodiment (step 3).

The main difference of this second embodiment is that each sub-segment is treated individually and the client can make quality decision across the boundary of the sub-segments. That is, the client could retrieve the first sub-segments corresponding to a segment before fully retrieving the previous segments. For instance, if segments 1 to 3 have three sub-segments each (a, b, c), the download order from the end device could be 1a 1b 2a 1c 2b 3a 2c 3b ...when the standard download would be 1 a 1 b 1 c 2a 2b 2c

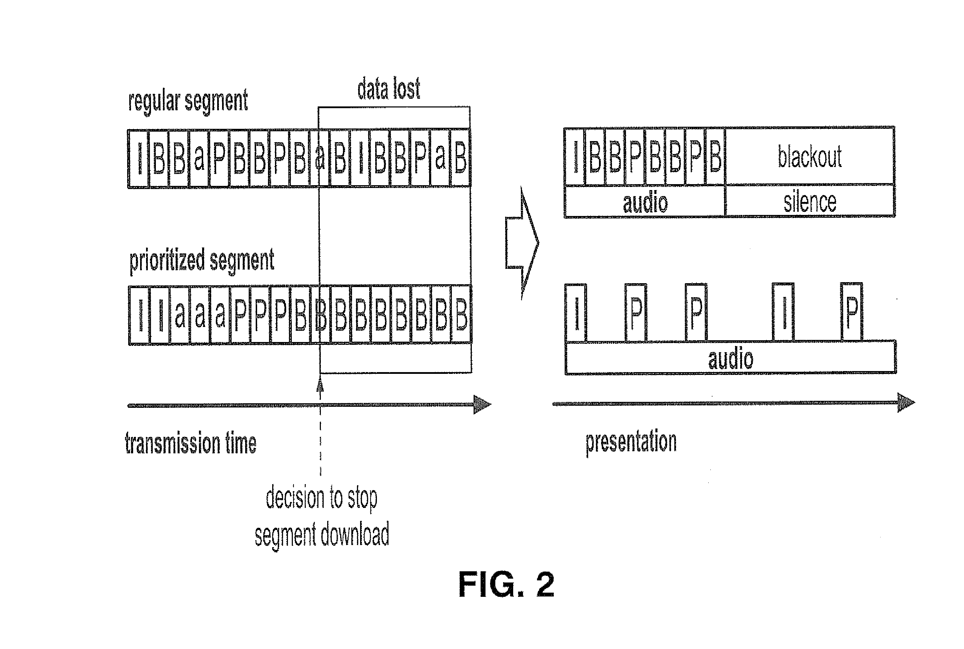

In an exemplary embodiment, when the segment is started to be decoding for playout then the client stops retrieving fragments (or sub-segments) of the segment even if it has not yet retrieved the whole segment. The segment will be started to be decoding for playout when the previous segment has been decoded and played (or at a predefined time if the segment is the first segment of the stream), so if the client finishes decoding one segment S, before that next one (S+1) was not completely downloaded (probably due to problems in the download), the download of the segment S+1 is aborted (the segment will be played incomplete with not all the fragments or sub-segments) and the following (S+2) may start to get downloaded (probably at a lower bitrate). Usually what it is done is that the end devices cuts the connection previously established to download S+1, and opens a new connection to download S+2 (in a HAS communication, each segment may be downloaded independently with a different connection). At that moment, without the prior art proposal, what happens is that part of the segment will get lost or the whole segment will be discarded. With the present proposal, what happens is that the segment is fully displayed, although maybe with a lower quality (see Figure 2).

A third possible embodiment will be a variation of any of the ones described, with the additional effect that part of the RTP packets are encrypted, based on a selective scrambling algorithm.

Of course, it is not mandatory to perform all the steps, because some of them are optional, so depending on the specific application some or all the steps will be implemented.

For assigning priority to the fragments, any prioritization algorithm can be used. A possible one would be grouping the fragments in the following priority classifications (from higher to lower):
- Fragments containing data of a video IDR or equivalent (e.g. I frames).
- Fragments containing audio data.
- Fragments containing data of a video reference picture (e.g. P frames,.
- Fragments containing data of a video non-reference picture (e.g. B frames ).
- Other data

The prioritization of the fragments can be enhanced by applying a more complex QoE model. An example of a more complex algorithm is shown in the following article: P. Pérez, J. Macías, J.J. Ruiz, N. García, "Effect of Packet Loss in Video Quality of Experience", Bell Labs Technical Journal, vol. 16, no. 1, pp. 91-104, Jun. 2011*. (doi: 10.1002*/*bltj.20488).* This algorithm takes into account, besides the type of the picture (IDR, reference, no-reference), the position of the fragment within the picture and the position of the picture within the GOP (Group of Pictures, or period between IDR pictures).

In one exemplary embodiment, the metadata included in the segment may be leveraged to implement selective scrambling. The metadata has information about the structure of the video stream. It is possible to reduce the scrambling rate while keeping the video almost undecodable by only scrambling strategically selected parts of the video frames. With this technology, this encryption could be done even in real-time at the network edge, with high scalability. This selective scrambling solution is disclosed in the patent application EP2309745.

Using said selective scrambling technique, in a media content stream, the effect of scrambling only a 5% of the stream could be similar of the effect of scrambling the 100%. However, to be able to do that, it must be possible to signal fragments of the media content stream, so that some fragments are scrambled and some fragments are not (in all scrambling standards you need to scramble complete packets, or fragments). As explained before, the fragments are the basic pieces of information in which the segment is rearranged and one fragment can be as small of some hundreds of bytes (much less than a full frame). Besides, the metadata, (including priority information and fragment position) that we have generated in the process allow to "label" each of the fragments, and we can use this information to know whether we have to scramble the packet or not.

In an exemplary embodiment, the media content data may be packetized. For example, the streaming solution may make use of Real Time Transport Protocol/User Datagram Protocol/Internet Protocol (RTP/UDP/IP) to transport the media content data, so the data arrangement and the associated metadata are implemented using the Real Time Transport Protocol RTP within the segments, just as in a pure multicast IPTV delivery platform: the media content is packetized in small RTP packets (typically representing below 5 ms of the video stream), and the HAS segments are created as a concatenation of these packets, with an additional field indicating their length. The RTP protocol defines a standardized packet format for delivering audio and video over the Internet. It was developed by the Audio-Video- Transport Working Group of the IETF and was originally designed as a multicast protocol, but it has been applied in many unicast applications as well. As RTP uses UDP instead of TCP, it is frequently used for applications which are less sensitive to packet loss, but typically very sensitive too delays.

In case of using RTP technology, a possible way of creating the above mentioned fragments is implementing a fragment as an RTP packet (using for example, the RTP sequence as the fragments sequence number and the RTP time stamp as the fragments byte stamp). This could simplify the implementation of the end device, especially in end devices supporting RTP/UPD streams. Of course it is required that the RTP packets contain homogeneous data as defined before.

Any other packetization and fragmentation techniques may also be used as for example .mp4 file format.

Figure 2 shows a schematic diagram of the segments displayed using a prior art technique and the segments displayed using a technique according to an embodiment of the invention in an exemplary scenario.

Top line (both left and right) describes a segment transmission and presentation using a prior art technique. Bottom describes a segment transmission and presentation using an embodiment of the present invention. The segment has video frames (intra-coded frames, I-frames, predictive-coded frames, P-frames, and bidirectionally-predictive-coded frames, B-frames and audio (a) frames or, being more general, "access units" (AUs). Each AU can be divided into smaller fragments or not. For the present explanation, in order to simplify the figure, it is assumed that one fragment = one AU.

The left part shows the structure of the segment for transmission. In the solution according to an exemplary embodiment ("prioritized segment"), the "fragments" have been re-ordered in priority order; but both segments (top line and bottom line) represent the same content. Note that the prioritized fragment contains the same AUs than the regular one, but in different order. Now the segment is transmitted but, for any reason (e.g. the connection is interrupted) the download (streaming) has to stop in the middle (i.e. all the data under the highlighted square are lost, because they have not been received by the end device) and it has to be sent to playout (this is the "presentation" part, on the right hand side of the image).

In the prior art ("regular segment") case (top), the client plays out the first half of the segment, and then stops (black or frozen video, and no audio too). In the "prioritized segment" case (bottom), it is different: packets are re-ordered and, as they have bytestamp (or other information which allow to restore their position), they are re-ordered by the client (end-device) and displayed in their right position and only the less important packets have been lost. To simplify: we have all the and P frames, plus all the audio. The result is that the segment is played out completely, although at a lower frame rate (33%), and with all the audio. Of course, dropping the frame rate and keeping the audio is much better than losing several seconds completely. Some subjective tests performed show that there could be a difference of 1 to 3 points in a MOS scale (1 to 5) between both approaches.

In an exemplary embodiment, the end device could be a set top box (STB) or any other device which can receive streamed multimedia content.

The presented embodiments potentially have the following advantages when compared with the prior art:
- The solution allows to recover from buffer underrun in HAS in an optimal way. That is, smaller HAS buffers can be used, therefore reducing the latency of the whole HAS solution.
- The effect of strong variations of the network capabilities (e.g. Network bandwidth) in the quality perceived by the client is reduced, reducing therefore the end to end delay (i.e. improving the relation quality-delay).
- Besides, it provides a mechanism to mitigate the effect of high network rate variations.
- More generically, it makes it possible to use in HAS all the QoE enhancement technology which has been developed for real-time RTP delivery, such as video preparation for Fast Channel Change, unequal loss protection or selective scrambling; that is, this solution allows to use QoE enhancement techniques in a different environment (HTTP delivery).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for improved delivery of a certain media content from a media server to an end device using Hypertext Transfer Protocol, HTTP, adaptive streaming where the streamed media content is segmented, each segment containing a certain part of the media stream coded at a specific bit rate for each segment, said method comprising:
a) Dividing each media content segment in N fragments, being N a design parameter.
b) Assigning a priority to each fragment and associating to each fragment, information required to restore the original position of each fragment in the segment to which they belong.
c) A prioritized segment is created by concatenating fragments in priority order, said segment including the associated information for each fragment
d) Said prioritized segment is sent from the media server to the end device in priority order starting with the fragment with highest priority
e) The end device receiving the fragments and storing the fragments in a buffer in their original position, using the associated information to obtain the original position of each fragment in the segment to which they belong
f) The end device retrieving a fragment from the buffer and decoding and playing the retrieved fragment even if not all the fragments of the segment to which the retrieved fragment belong have been received and buffered

2. A method according to any of the previous claims where, when the end device starts decoding fragments belonging to a certain segment for playout, the end device stops buffering the fragments of said certain segment even if not all the fragments of said segment have been received and buffered.

3. A method according to any of the previous claims where the size of each fragment is smaller than the size of a media frame so the information from a media frame is allocated to more than one fragment.

4. A method according to any of the previous claims where the assigned priority to a fragment of the segment depends on the effect that the lost of said fragment would have in the quality perceived by an user of the end device playing the segment.

5. A method according to any of the previous claims where after step c) the prioritized segment is divided in K sub-segments each including several fragments, where K is a design parameter, where the 1^{st} sub-segment has the highest priority and Kth sub-segment has the lowest and said sub-segments are built in a way that having only the 1^{st} sub-segment allows playing the whole segment and in step d) said sub-segments are sent in priority order that is, starting by the subsegment 1, then 2...til sub-segment K.

6. A method according to any of the previous claims where the steps of dividing the each media content segment in N fragments, being N a design parameter, assigning a priority to each fragment and associating information to each segment are performed by the media server.

7. A method according to any of the claims 1 to 5, where the steps of dividing the each media content segment in N fragments, being N a design parameter, assigning a priority to each fragment and associating information to each segment are performed by a node different from the media server and then the fragments, the priority information and the associated information are sent to the media server for transmission to the end device.

8. A method according to claim 2 where the time when the end device starts decoding fragments of a certain segment for playout is the time when the end device has finishing playing the previous segment if the certain segment is not the first segment of the media stream or a predefined time if the certain segment is the first segment of the media stream.

9. A method according to any of the previous claims where each fragment contains only one type of media source either audio or video, and there is no information from two different media content frames in the same fragment and where the information associated to each fragment is a sequence number and/or a byte stamp which indicates the offset of the fragment from the beginning of the segment.

10. A method according to any of the previous claims where the media content stream is packetized according to the Real Time Transport Protocol RTP and each fragment correspond to a RTP packet.

11. A media server for improved delivering of a certain media content to an end device using Hypertext Transfer Protocol, HTTP, adaptive streaming where the streamed media content is segmented each segment containing a certain part of the media stream coded at a specific bit rate for each segment, said media server comprising:
- Means for dividing each media content segment in N fragments, being N a design parameter
- Means for assigning a priority to each fragment
- Means for associating to each fragment information required to restore the original position of the fragments in each segment
- Means for creating a prioritized segment by concatenating fragments in priority order, said segment including the associated information for each fragment
- Means for sending said prioritized segment from the media server to the end device in priority order starting with the fragment with highest priority

12. An end device for improved delivery of a certain media content from one media server to the end device using Hypertext Transfer Protocol, HTTP, adaptive streaming where the streamed media content is segmented into, each segment containing a certain part of the media stream coded at a specific bit rate for each segment and where each media content segment is divided in N fragments, each fragment having assigned a certain priority, being N a design parameter, the end device comprising:
- Means for receiving the fragments via HTTP, and means for receiving the information associated to said fragments and means for storing them into a buffer in the original position using the associated information
- Means for retrieving a fragment from the buffer and decoding and playing the retrieved fragment even if not all the fragments of the segment to which the retrieved fragment belong have been received and buffered

13. System for improved delivery of a certain media content from a media server to an end device using Hypertext Transfer Protocol, HTTP, adaptive streaming where the streamed media content is segmented, each segment containing a certain part of the media stream coded at a specific bit rate for each segment, said system comprising:
- A node comprising:
- Means for dividing each media content segment in N fragments, being N a design parameter
- Means for assigning a priority to each fragment
- Means for associating to each fragment information required to restore the original position of the fragments in each segment
- Means for creating a prioritized segment by concatenating fragments in priority order, said segment including the associated information for each fragment
- At least a media server comprising:
- Means for sending said prioritized segment from the media server to the end device in priority order starting with the fragment with highest priority
- At least and end device comprising:
- Means for receiving the fragments via HTTP, and means for receiving the information associated to said fragments and means for storing them into a buffer in the original position using the associated information
- Means for retrieving a fragment from the buffer and decoding and playing the retrieved fragment even if not all the fragments of the segment to which the retrieved fragment belong have been received and buffered

14. A computer program product comprising computer-executable instructions for performing the method according to any of the claims 1-10, when the program is run on a computer.

15. A digital data storage medium encoding a machine-executable program of instructions to perform a method according to any of the claims 1-10.
